# EUROPEAN PATENT SPECIFICATION

(11) **EP 1 887 395 B1**
(45) Date of publication and mention of the grant of the patent: **05.01.2011**
(21) Application number: 07103086.0
(22) Date of filing: 26.02.2007
(51) Int. Cl.: G02B 6/38, G02B 6/42

(54) **Optical connector**
Optischer Verbinder
Connecteur optique

(30) Priority: 08.08.2006 JP 2006216115
(43) Date of publication of application: 13.02.2008
(73) Proprietor: Fujitsu Component Limited, Tokyo 141-8630 (JP)
(72) Inventor: Daikuhara, Osamu, Shinagawa-ku Tokyo 141-8630 (JP); Ohse, Yuko, Shinagawa-ku Tokyo 141-8630 (JP); Takizawa, Shigeyuki, Shinagawa-ku Tokyo 141-8630 (JP); Hashi, Toshio, Shinagawa-ku Tokyo 141-8630 (JP); Miyazawa, Hideo, Shinagawa-ku Tokyo 141-8630 (JP)
(74) Representative: Hitching, Peter Matthew

(56) References cited:
- WO-A-03/103191
- US-A- 4 666 236
- US-A- 2004 114 866
- US-B1- 6 254 282

## Description

### BACKGROUND OF THE INVENTION

### 1. Field of the Invention

The present invention generally relates to an optical connector which is connected to an optical transmission line.

### 2. Description of the Related Art

Recently, communication capacity has been increased due to progress of optical communications; therefore, a multi-core fiber optical connector has become required.

A conventional optical connector has been physically connected to the optical transmission line. In order to decrease loss at the connection position, the ferrules of optical fibers must be pressed by a force of approximately 10 N.

That is, in the conventional optical connector, since the ferules must be pressed by high force, inserting and extracting forces of the optical transmission line become large. Therefore, the optical transmission line cannot be easily inserted into or extracted from the optical connector.

Especially, when a multi-core fiber is used, a plug frame which holds the optical transmission line becomes large and the optical transmission line cannot be uniformly pressed. When force of at least 10 N is required in each optical transmission line, a force more than 10 N needs to be applied.

US 6,254,282 discloses an optical transmit-receive module with an optical fibre plug, connected to an optical fibre for optical transmission, which can be inserted in and removed from a housing. Within the housing, there are provided a branching type light guide, and an optical semiconductor device giving an optical signal to the branching type light guide and receiving an optical signal from the branching type light guide. When the optical fibre plug is inserted in the housing, it is optically connected with the branching type light guide through a light-permeable member having a refractive index approximately equal to refractive indices of the optical fibre and the branching type light guide.

US 4,666,236 discloses an optical coupling device which is produced with the use of an optical medium containing a monomer which is polymerizable when irradiated with light to give a polymer having a higher refractive index than the monomer. The two elements to be coupled optically are at least partly embedded in the optical medium, and an optical coupling path partly interconnecting the two elements is formed by the photopolymerization of the monomer which is accelerated by light propagating from at least one of the elements toward the other element. Thus the photopolymerization of the monomer forms in the portion of the optical coupling path a polymer which has a higher refractive index than the surrounding portion and which therefore provides an optical waveguide of the step index type.

WO 03/103191 discloses optical transmitting and receiving modules with multi-ports. The transmitting module comprises two or more substrates attached in parallel to the bottom of a package; and an optical waveguide including plural unit waveguides having plural optical input terminals formed in the same number as that of light emitting elements and a single optical output terminal, wherein the input terminals are disposed in front of emitting portions of the emitting elements, and the output terminal is disposed coaxially with an optical fibre. The receiving module comprises two or more substrates; an optical waveguide including plural unit waveguides having plural optical output terminals and a single optical input terminal, wherein the output terminals are disposed in front of receiving portions of the receiving elements, and the input terminal is disposed coaxially with an optical fibre.

US 2004/0114866 discloses an optical connector comprising an optical path changing device. The path changing device comprises a cladding having first and second faces, at least one mirrored surface and a plurality of waveguides having end surfaces at the first and second faces. Each waveguide defines an optical path from the first surface to the mirrored surface, where its direction is changed, and extending on to the second surface. Pin insertion apertures are formed on an exterior case that houses the optical path changing device.

### SUMMARY OF THE INVENTION

According to the present invention as defined by claim 1, there is provided an optical connector which enables to connect an optical device to one end and another optical device to the other end, comprising: a waveguide member; and a case which contains the waveguide member; wherein the waveguide member includes a waveguide array main body; a plurality of waveguides formed in the waveguide array main body; a plurality of first lenses formed in the waveguide array main body, each of the first lenses to face one end of one of the plural waveguides; and a plurality of second lens formed in the waveguide array main body, each of the second lenses to face the other end of one of the plural waveguides, characterized by further comprising a plurality of waveguide members, wherein the plurality of waveguide members being contained in the case, and the case includes a plurality of guiding sections into which plugs of a complementary optical plug connector are engaged and the plurality of guiding sections guide tips of optical fibers of the optical plug connector to the corresponding waveguide members.

The present invention provides an optical connector into which an optical transmission line can be easily inserted or from which the optical transmission line can be easily extracted

Further, preferred, features of the present invention may be found in the attached dependent claims.

According to an embodiment of the present invention, an optical connector is formed by using a waveguide member that includes a waveguide, a first lens disposed at one end surface of the waveguide, and a second lens disposed at the other end surface of the waveguide. Therefore, when an optical transmission line is connected to the optical connector, it is not needed to press an end surface of the optical transmission line. That is, the inserting force of the optical transmission line into the optical connector and the extracting force thereof from the optical connector are low. With this, insertion or extraction of the optical transmission line is easy. In addition, the structure of the optical connector is simple. Especially, when the optical transmission line is formed of a multi-mode fiber, the optical transmission line can be easily inserted into the optical connector and extracted therefrom. In addition, since the lenses condense light transmitting through the optical connector and the optical transmission line, the light loss can be decreased and the optical communications can be efficiently executed.

Features and advantages of the present invention will be apparent from the following detailed description when read in conjunction with the accompanying drawings.

### BRIEF DESCRIPTION OF THE DRAWINGS

Fig. 1 is a perspective view of optical connectors according to a first embodiment of the present invention;
Fig. 2 is an exploded perspective view of an optical socket connector 100 shown in Fig. 1;
Fig. 3 is a perspective view of a waveguide array according to the first embodiment of the present invention;
Fig. 4 is a diagram showing a structure of the waveguide array shown in Fig. 3;
Fig. 5 is a perspective view showing a mounting method of the waveguide array on a printed circuit board;
Fig. 6 is a perspective view showing a positioning structure between the optical socket connector and an optical plug connector;
Fig. 7 is an exploded perspective view of the optical plug connector;
Fig. 8 is a perspective view of optical connectors according to a second embodiment of the present invention;
Fig. 9 is an exploded perspective view of an optical plug connector shown in Fig. 8;
Fig. 10 is a perspective view of a waveguide array according to the second embodiment of the present invention;
Fig. 11 is a cut-away side view when the optical plug connector shown is attached to the optical socket connector according to the second embodiment of the present invention;
Fig. 12 is a perspective view of optical connectors according to a third embodiment of the present invention;
Fig. 13 is an exploded perspective view of an optical plug connector shown in Fig. 12;
Fig. 14 is a perspective view of a waveguide array in the optical plug connector shown in Fig. 12;
Fig. 15 is a cut-away side view when the optical plug connector is attached to optical socket connectors on printed circuit boards according to the third embodiment of the present invention;
Fig. 16 is a cut-away side view of an optical connector according to a fourth embodiment of the present invention; and
Fig. 17 is a perspective view of a waveguide array shown in Fig. 16.

### DESCRIPTION OF THE PREFERRED EMBODIMENTS

Referring to the drawings, embodiments of the present invention are described.

First, a first embodiment of the present invention is described.

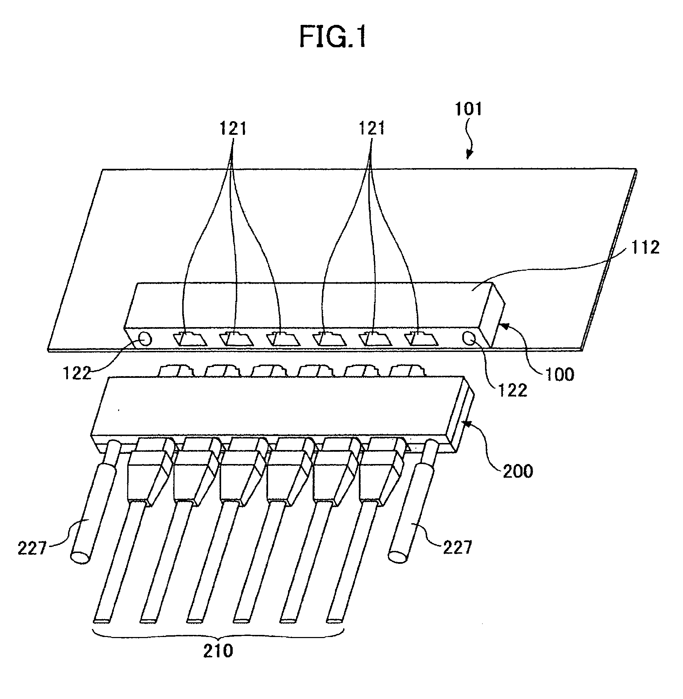

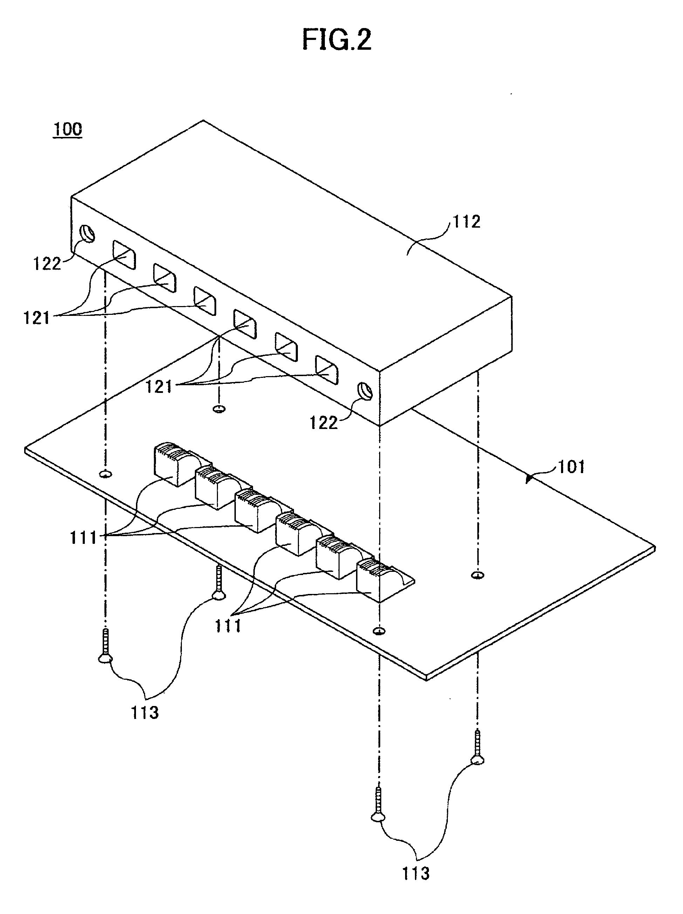

Fig. 1 is a perspective view of optical connectors according to the first embodiment of the present invention. Fig. 2 is an exploded perspective view of an optical socket connector 100 shown in Fig. 1.

As shown in Figs. 1 and 2, the optical socket connector 100 is mounted on a printed circuit board 101, and an optical plug connector 200 is attached to the optical socket connector 100. Plural waveguide arrays (waveguide members) 111 are adhered on the printed circuit board 101 by resin and covered with a case 112. With this, the optical socket connector 100 is formed. The case 112 is secured to the printed circuit board 101 by screws 113.

Guiding sections 121 and screw holes 122 are formed in the front surface of the case 112. The optical plug connector 200 engages (is inserted) into the guiding sections 121. The guiding sections 121 guide tips of optical fibers of the optical plug connector 200 to the corresponding waveguide arrays 111.

Next, the waveguide array 111 is described.

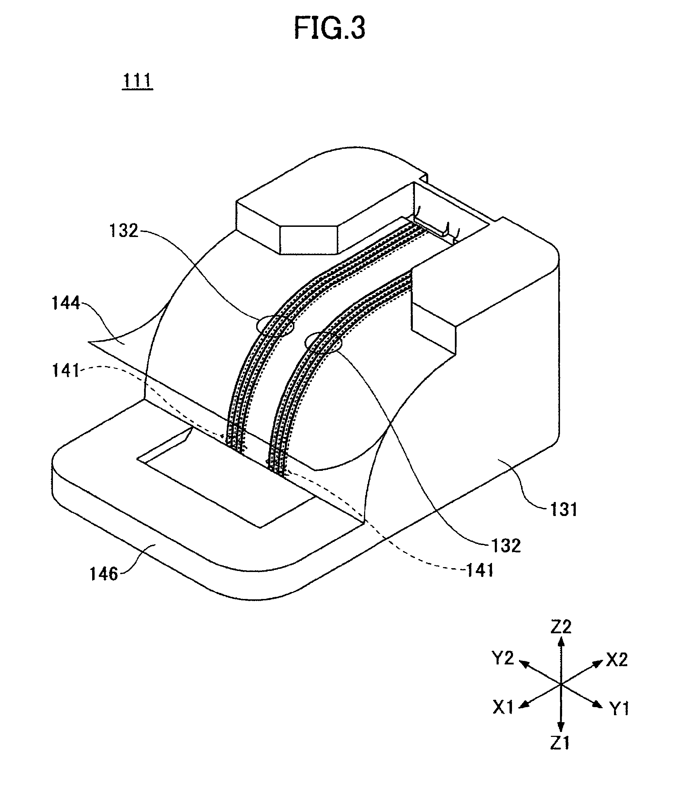

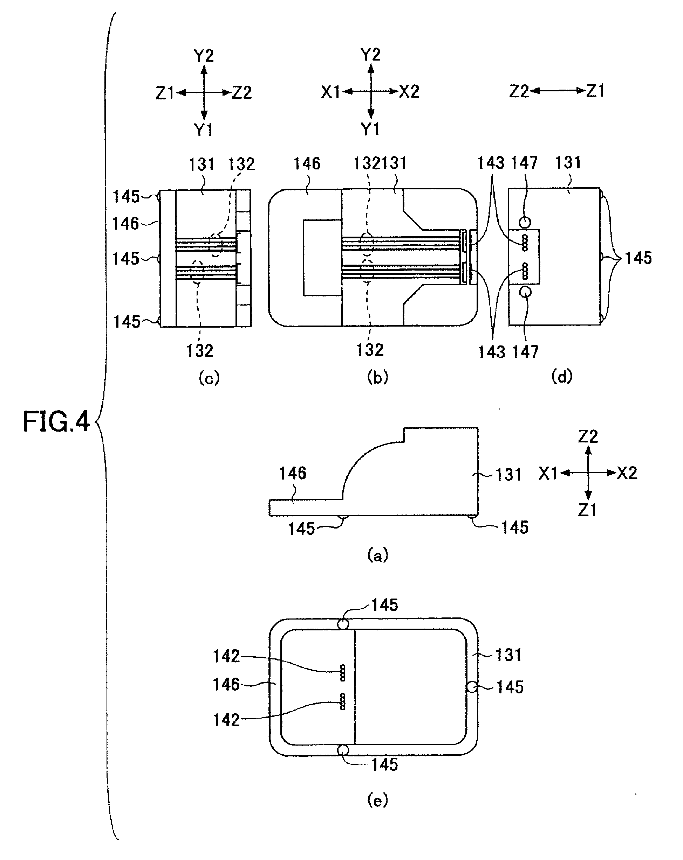

Fig. 3 is a perspective view of the waveguide array 111. Fig. 4 is a diagram showing a structure of the waveguide array 111. In Fig. 4, (a) shows a side view, (b) shows a plan view, (c) shows a front view, (d) shows a back view, and (e) shows a bottom view.

As shown in Figs. 3 and 4, in the waveguide array 111, plural waveguides 132 are formed in a waveguide array main body 131. The waveguide 132 is curved so that the direction of one end of the waveguide 132 is approximately orthogonal to the direction of the other end thereof.

The waveguide array main body 131 is formed of transparent resin by molding. Grooves 141 are formed in the surface of the waveguide array main body 131 so that the waveguides 132 are formed. Lenses 142 are disposed at positions where the grooves 141 are extended in the Z1 direction in the waveguide array main body 131 and lenses 143 are disposed at positions where the grooves 141 are extended in the X2 direction in the waveguide array main body 131.

In the bottom surface of the waveguide array main body 131, that is, in the Z1 direction, a concave section is formed. The upper surface of the waveguide array main body 131 has a part where an approximately cylinder-shaped surface (curved surface) is formed in the Z2 direction. The grooves 141 are formed in the curved surface. The curvature of the curved surface is determined so that light is not leaked to the outside when the waveguides 132 are formed.

Resin whose refractive index is different from that of the waveguide array main body 131 is supplied into the grooves 141 and the resin is hardened; then the waveguide array main body 131 including the hardened resin is covered with a resin film 144 whose refractive index is almost the same as that of the waveguide array main body 131. With this, the waveguides 132 are formed.

The one end of the waveguide 132 faces in a direction orthogonal to the printed circuit board 101, that is, in the Z1 direction, and the other end thereof faces in a direction parallel to the printed circuit board 101, that is, in the X2 direction. The cross-sectional shape of the groove 141 is almost a square with 50 µm sides in a multimode fiber, but is almost a square with 10 µm sides in a single-mode fiber.

Three convex sections 145 are formed at the edge of the bottom surface of the waveguide array main body 131. The shape of the convex section 145 is almost a semi-ball. When the waveguide arrays 111 are mounted on the printed circuit board 101, the convex sections 145 contact the surface of the printed circuit board 101. With this, the contacting area between the waveguide arrays 111 and the printed circuit board 101 can be as small as possible. Consequently, the waveguide arrays 111 can be smoothly slid on the printed circuit board 101. That is, the waveguide arrays 111 can be precisely positioned on the printed circuit board 101. In addition, the waveguide array main body 131 has a flange section 146 extending in the X1 direction.

Next, a mounting method of the waveguide arrays 111 on the printed circuit board 101 is described.

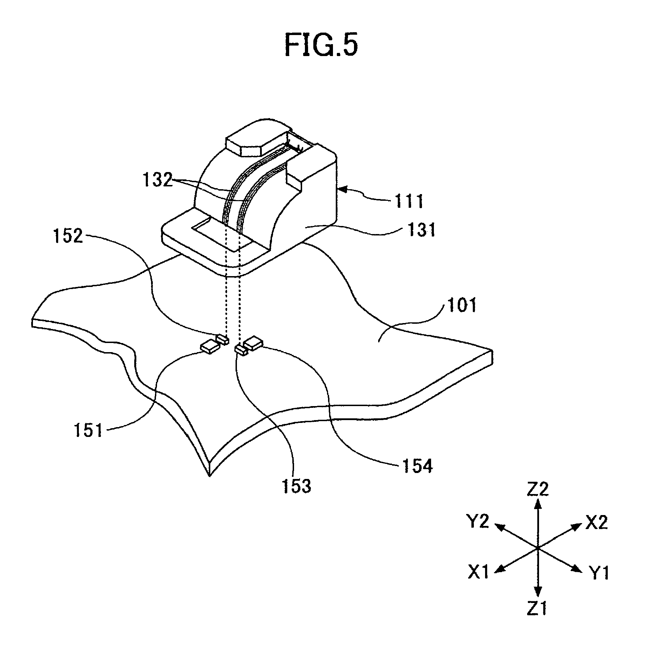

Fig. 5 is a perspective view showing the mounting method of the waveguide array 111 on the printed circuit board 101.

When the waveguide array 111 is mounted on the printed circuit board 101, a predetermined gap is formed between the printed circuit board 101 and the bottom surface of the waveguide array main body 131 including the flange section 146 by the convex sections 145. Resin is supplied in the gap. Before supplying the resin, a driver IC 151, a light emitting element 152, a light receiving element 153, a receiver IC 154, and so on are mounted on the printed circuit board 101 under the waveguide array main body 131 including the flange section 146.

As shown in Fig. 4, actually, the waveguide 132 has four lines, the lens 142 has four lenses, and the lens 143 has four lenses. In addition, in Fig. 5, only one light emitting element 152 and only one light receiving element 153 are shown; however, actually, four light emitting elements 152 and four light receiving elements 153 are disposed corresponding to the number of the lenses 142.

As shown in Figs. 4 and 5, the lenses 142 are formed at the positions where the waveguides 132 are extended in the bottom surface of the waveguide array main body 131. The surface of the lenses 142 is spherical; one lens 142 is disposed to face the light emitting element 152 and the other lens 142 is disposed to face the light receiving element 153. The lens 142 condenses light emitted from the light emitting element 152 and inputs the condensed light to the end surface of the waveguide 132. The other lens 142 condenses light output from the end surface of the waveguide 132 on the light receiving element 153.

The distance between the lens 142 and the light emitting element 152 or the light receiving element 153 is determined by the convex sections 145 corresponding to the focal length of the lens 142. The focal length is based on the refractive index of the waveguide array 111, the curvature of the lens 142, and so on.

The lenses 143 are formed at the positions where the waveguides 132 are extended on the back surface of the waveguide array main body 131, that is, on the surface in the X2 direction of the waveguide array main body 131. The end surfaces of the optical transmission lines of the optical plug connector 200 face the lenses 143.

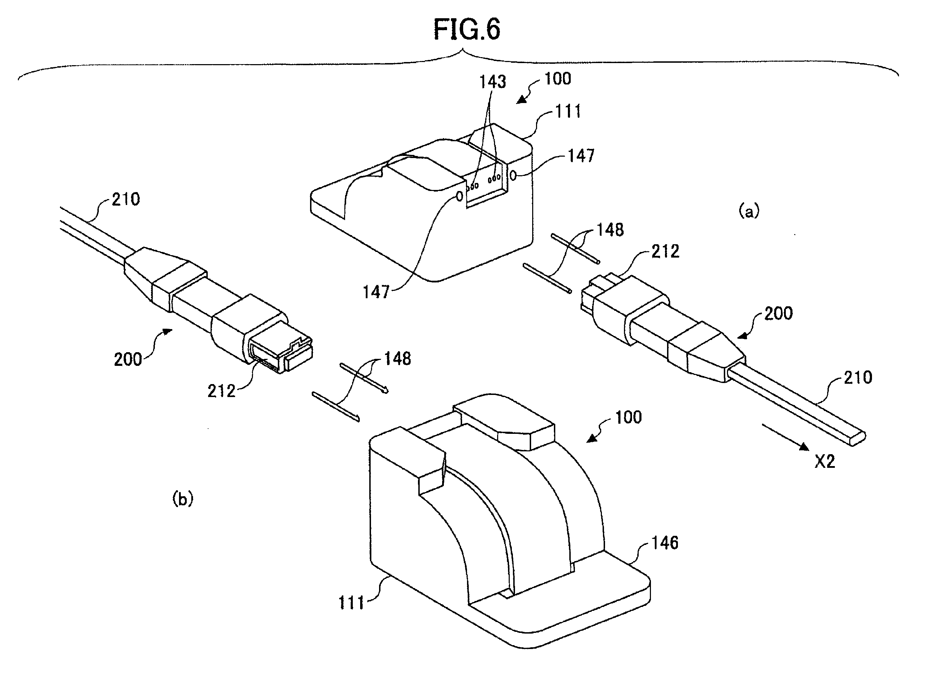

Fig. 6 is a perspective view showing a positioning structure between the optical socket connector 100 and the optical plug connector 200. In Fig. 6, (a) is a view taken from the side of the optical plug connector 200, and (b) is a view taken from the side of the optical socket connector 100.

As shown in Fig. 6, holes 147 are formed in the back surface (X2 direction surface) of the waveguide array main body 131 at the side of the lenses 143. Pins 148 disposed at the end of the optical transmission line of the optical plug connector 200 are engaged into the holes 147. With this, the lenses 143 are positioned to face the end surface of the optical transmission line of the optical plug connector 200.

The surface of the lens 143 is spherical and one lens 143 condenses light output from the end surface of the waveguide 132 on the end surface of the light transmission line of the optical plug connector 200. Further, the other lens 143 condenses light output form the end surface of the light transmission line of the optical plug connector 200 on the end surface of waveguide 132. At this time, the distance between the lens 143 and the end surface of the optical transmission line of the optical plug connector 200 is maintained at a predetermined distance corresponding to the focal length of the lens 143. The focal length is based on the refractive index of the waveguide array 111, the curvature of the lens 143, and so on.

Since the waveguide array 111 is used, light diffusion and light attenuation can be prevented without tightly pressing the optical plug connector 200 into the waveguide array 111. That is, optical communications can be efficiently executed.

As described above, by using the waveguide arrays 111, light output from the optical transmission line of the optical plug connector 200 can be led to the printed circuit board 101, and also light output from the printed circuit board 101 can be led to the optical transmission line of the optical plug connector 200.

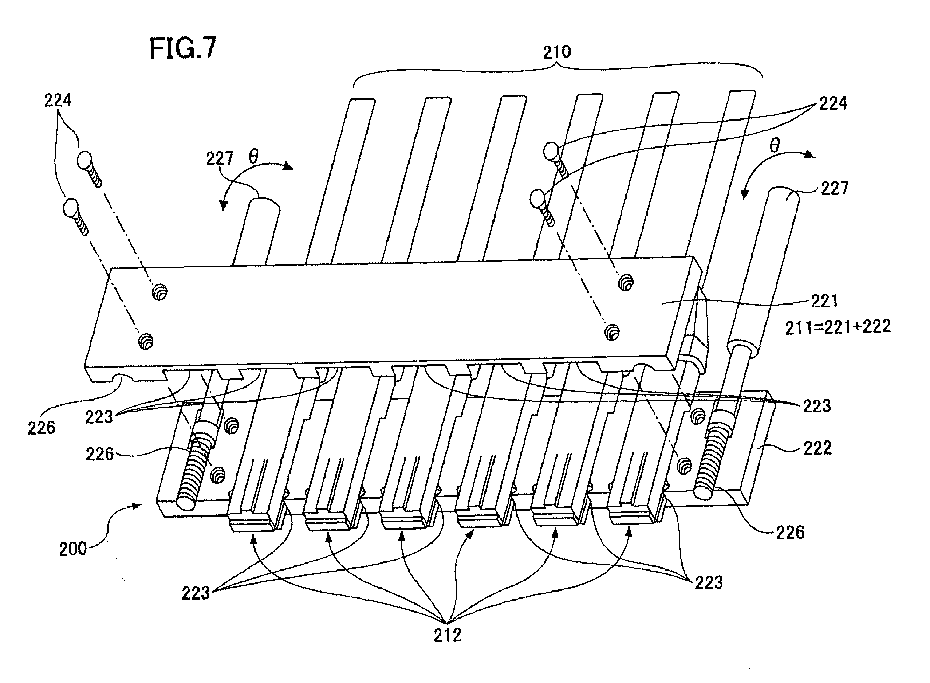

Fig. 7 is an exploded perspective view of the optical plug connector 200.

Next, referring to Figs. 1 and 7, the optical plug connector 200 is described in detail.

In the optical plug connector 200, a plug connector 212 is attached to the tip of the multi-core fiber cable 210, and the plural plug connectors 212 to which the corresponding tips of the multi-core fiber cables 210 are attached are maintained by a plug frame 211. The plug connector 212 is, for example, an MPO connector.

The plug frame 211 is composed of an upper frame 221 and a lower frame 222. Each of the upper frame 221 and the lower frame 222 has engaging sections 223 for engaging the plug connectors 212.

The upper frame 221 is secured to the lower frame 222 by screws 224. The plug connectors 212 are secured to the plug frame 211 by engaging the plug connectors 212 into the engaging sections 223. With this, the plural multi-core fiber cables 210 are integrated. The tips of the plug connectors 212 protrude from the plug frame 211 in the direction facing the optical socket connector 100.

Screw holding sections 226 are formed near each end of the upper frame 221 and the lower frame 222. When screws 227 are securely held by the corresponding screw holding sections 226 and the upper frame 221 is secured to the lower frame 222 by the screws 224, the screws 227 are securely held in the screw holding sections 226. The screws 227 are rotatably held by the plug frame 211 in the arrow θ direction. Similar to the tips of the plug connectors 212, the tips of the screws 227 protrude in the direction facing the optical socket connector 100.

The tips of the plug connectors 212 of the optical plug connector 200 are inserted into the corresponding guiding sections 121 formed in the front surface of the case 112 of the optical socket connector 100. With this, the tips of the screws 227 face the corresponding screw holes 122 of the optical socket connector 100. When the screws 227 are threaded into the corresponding screw holes 122, the optical plug connector 200 is secured to the optical socket connector 100.

As described above, according to the first embodiment of the present invention, there is no need for the plug connectors 212 of the optical plug connector 200 to be pressed by a high force to contact the corresponding waveguide arrays 111 of the optical socket connector 100. Therefore, the securing force generated by the screws 227 can be small. Consequently, inserting and extracting forces between the optical socket connector 100 and the optical plug connector 200 can be small and the optical plug connector 200 can be easily inserted into the optical socket connector 100 and easily extracted form the optical socket connector 100.

In addition, since the strength of the case 112 can be low, the case 112 can be formed of resin. Consequently, the cost of the optical socket connector 100 can be low and the weight thereof can be light.

As described above, as shown in Fig. 1, the optical socket connector 100 and the optical plug connector 200 using the multi-core fiber cables 210 can be realized.

In the first embodiment of the present invention, the light input direction to the waveguide array 111 is orthogonal to the light output direction from the waveguide array 111. However, the light input and output directions can be freely determined by adjusting the angle between the light input and output directions.

### [Second Embodiment]

Next, a second embodiment of the present invention is described.

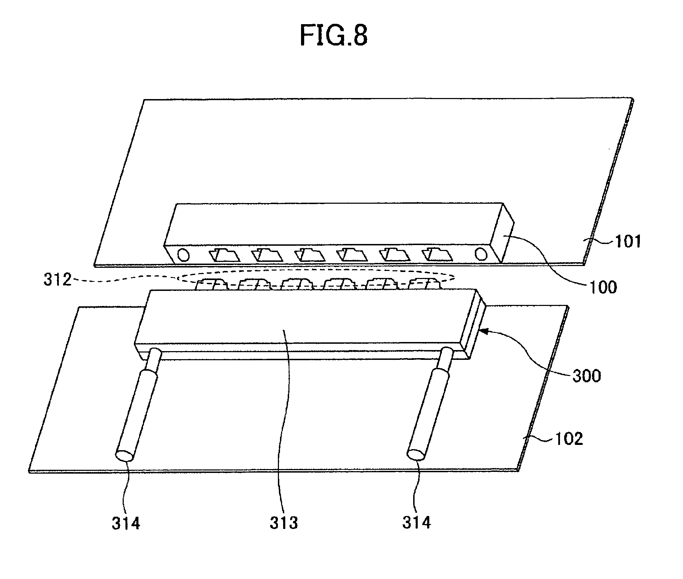

Fig. 8 is a perspective view of optical connectors according to the second embodiment of the present invention. In Fig. 8, a same element as that shown in Fig. 1 has the same reference number and the same description is omitted.

In the second embodiment of the present invention, an optical plug connector 300 is used and is directly mounted on a printed circuit board 102, and the printed circuit board 102 is directly connected to the printed circuit board 101 on which the optical socket connector 100 is mounted.

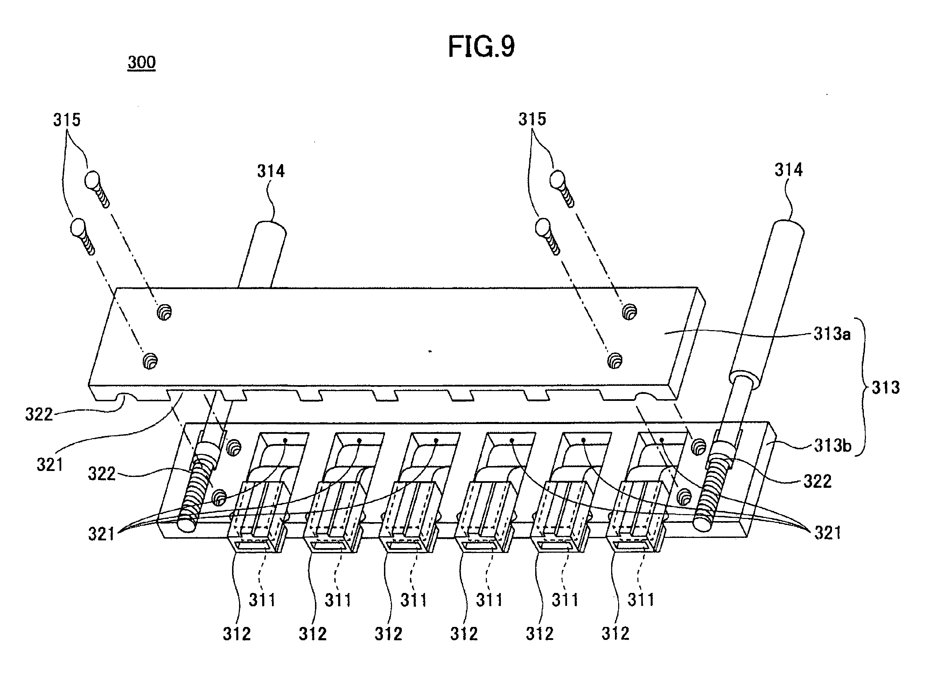

Fig. 9 is an exploded perspective view of the optical plug connector 300 according to the second embodiment of the present invention.

The optical socket connector 300 includes waveguide arrays 311, plug frames 312, a case 313, screws 314, and screws 315.

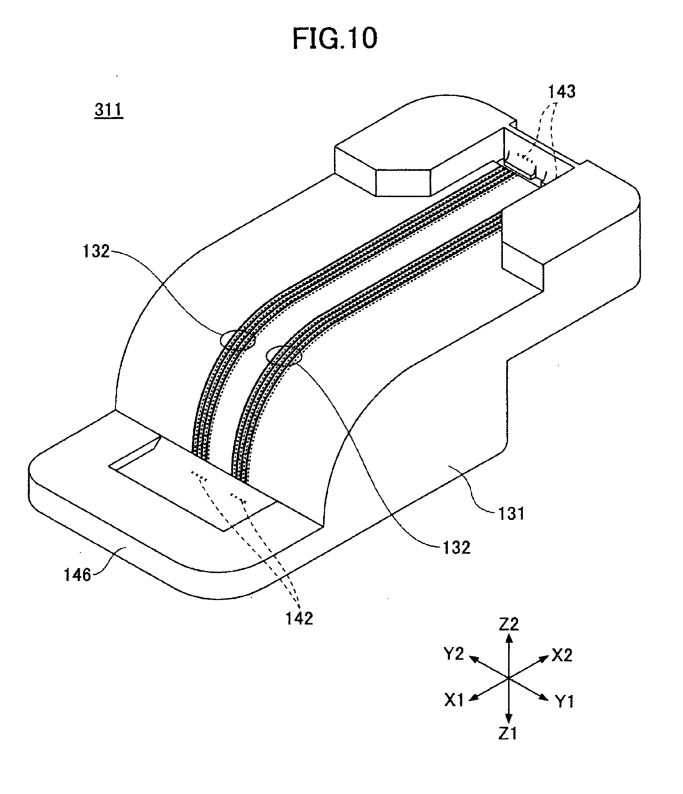

Fig. 10 is a perspective view of the waveguide array 311. In Fig. 10, a same element as that shown in Fig. 3 has the same reference number and the same description is omitted.

In the waveguide array 311, similar to the waveguide array 111 shown in Fig. 3, one end of the waveguide 132 is extended in the Z1 direction, and the waveguide array 311 is mounted on the printed circuit board 102.

The case 313 is composed of an upper case 313a and a lower case 313b. Each of the upper and lower cases 313a and 313b has engaging sections 321 and 322.

The waveguide arrays 311 and the plug frames 312 are engaged in the corresponding engaging sections 321. The plug frame 312 is connected to the end of the waveguide array 311 in the X2 direction and is engaged into the engaging sections 321. The screws 314 are engaged into the corresponding engaging sections 322.

The upper case 313a and the lower case 313b are secured by the screws 315. With this, the waveguide arrays 311 and the plug frames 312 are secured to the engaging sections 321, and the screws 314 are rotatably maintained in the corresponding engaging sections 322.

At this time, the plug frames 312 protrude from the front surface of the case 313 in the direction facing the optical socket connector 100. In addition, the tips of the screws 314 protrude from the front surface of the case 313 in the direction facing the optical socket connector 100.

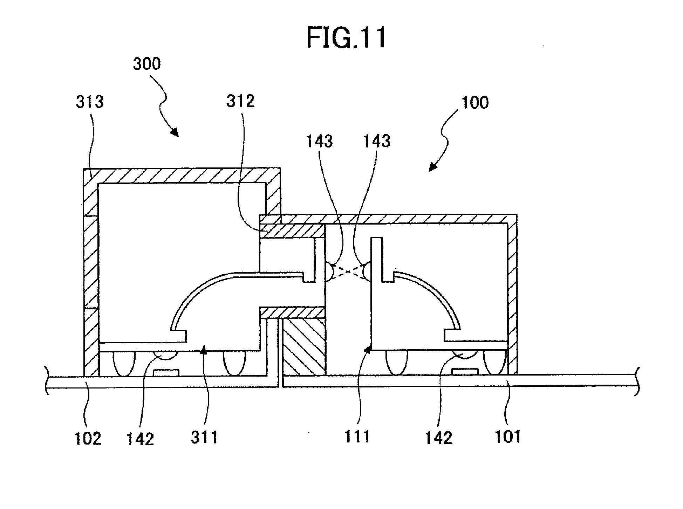

Fig. 11 is a cut-away side view when the optical plug connector 300 is attached to the optical socket connector 100.

As shown in Fig. 11, when the optical plug connector 300 is attached to the optical socket connector 100, the distance between the lens 143 of the waveguide array 311 and the lens 143 of the waveguide array 111 is maintained at a predetermined distance corresponding to the focal lengths of the lenses 143 facing each other. The focal length is determined based on the refractive indexes of the waveguide arrays 111 and 311, the curvature of the lens, 143, and so on.

As described above, according to the second embodiment of the present invention, the printed circuit board 101 can be directly connected to the printed circuit board 102 in the optical communications without using an optical fiber.

### [Third Embodiment]

Next, a third embodiment of the present invention is described.

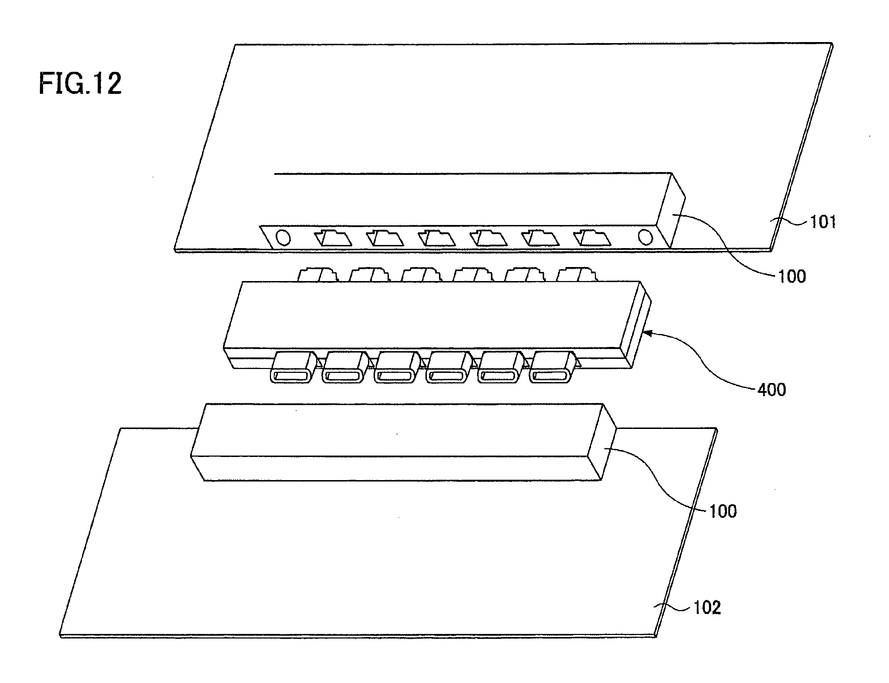

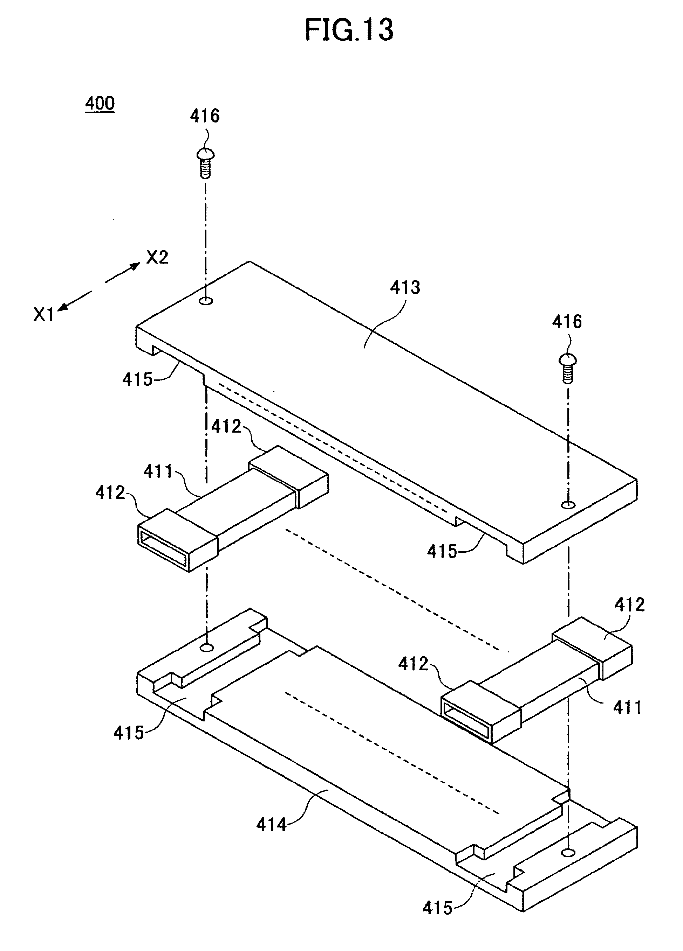

Fig. 12 is a perspective view of optical connectors according to the third embodiment of the present invention. Fig. 13 is an exploded perspective view of an optical plug connector 400 shown in Fig. 12. In Figs. 12 and 13, a same element as that shown in Fig. 8 has the same reference number and the same description is omitted.

The optical plug connector 400 is an adapter which connects the optical socket connector 100 mounted on the printed circuit board 101 with the optical socket connector 100 mounted on the printed circuit board 102. As shown in Fig. 13, the optical plug connector 400 includes plural waveguide arrays 411, plural plug frames 412, an upper case 413, and a lower case 414. In Fig. 13, two plug frames 412 are attached to the waveguide array 411.

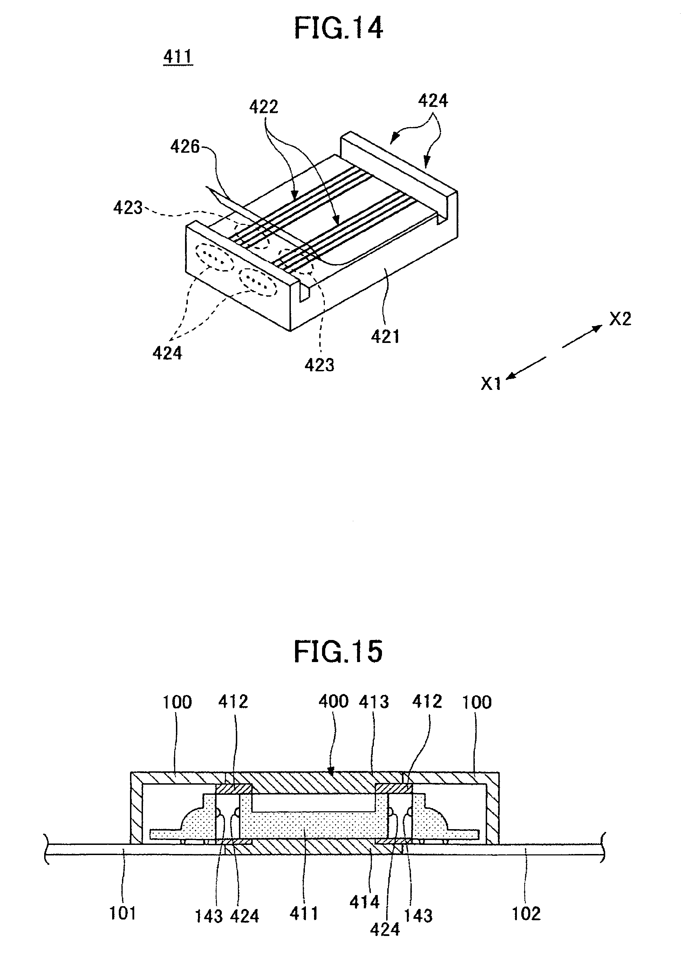

Fig. 14 is a perspective view of the waveguide array 411.

As shown in Fig. 14, the waveguide array 411 includes plural waveguides 422 formed in a waveguide array main body 421. The waveguide array main body 421 is formed of transparent resin by molding. The waveguide array main body 421 includes grooves 423 in which the waveguides 422 are formed and lenses 424 disposed at positions where the grooves 423 are formed at the side surfaces of the waveguide array main body 421.

Resin whose refractive index is different from that of the waveguide array main body 421 is supplied into the grooves 423 and the resin is hardened; then the waveguide array main body 421 including the hardened resin is covered with a resin film 426 whose refractive index is almost the same as that of the waveguide array main body 421. With this, the waveguides 422 are formed.

The waveguide 422 is formed in a straight-line shape in the X1 and X2 directions. The cross-sectional shape of the groove 423 is almost a square with 50 µm sides in a multimode fiber, but is almost a square with 10 µm sides in a single-mode fiber.

The plug frames 412 are attached at both the ends of the waveguide array 411. Plural waveguide arrays 411 to which the plug frames 412 are attached are engaged into corresponding engaging sections 415 formed in the upper case 413 and the lower case 414. Then, the upper case 413 and the lower case 414 are secured to each other by screws 416.

Fig. 15 is a cut-away side view when the optical plug connector 400 is attached to the optical socket connectors 100 on the printed circuit boards 101 and 102.

As shown in Fig. 15, when the optical plug connector 400 is attached between the optical socket connector 100 on the printed circuit board 101 and the optical socket connector 100 on the printed circuit board 102, the distance between the lens 424 of the waveguide array 411 and the lens 143 of the waveguide array 111 is maintained at a predetermined distance corresponding to the focal lengths of the lenses 143 and 424 facing each other.

As described above, according to the third embodiment of the present invention, the optical socket connector 100 on the printed circuit board 101 can be connected with the optical socket connector 100 on the printed circuit board 102 by the optical plug connector 400.

### [Fourth Embodiment]

Next, a fourth embodiment of the present invention is described.

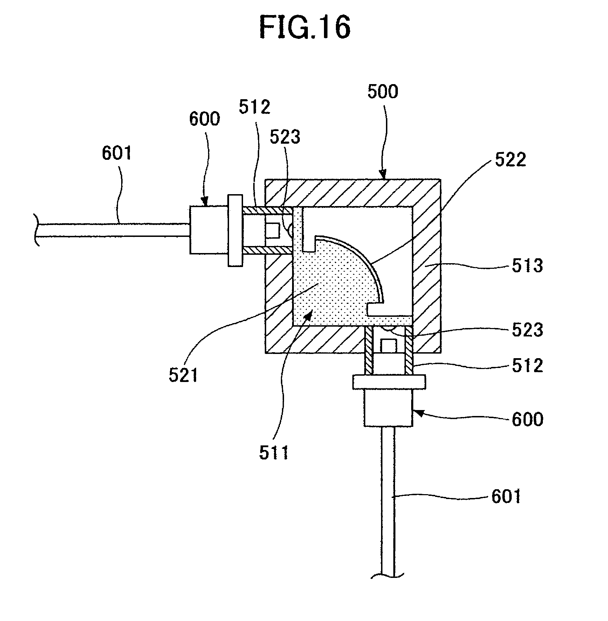

Fig. 16 is a cut-away side view of an optical connector 500 according to the fourth embodiment of the present invention.

The optical connector 500 orthogonally bends light, that is, is a right angle type adapter. The optical connector 500 includes waveguide arrays 511, sockets 512, and a case 513.

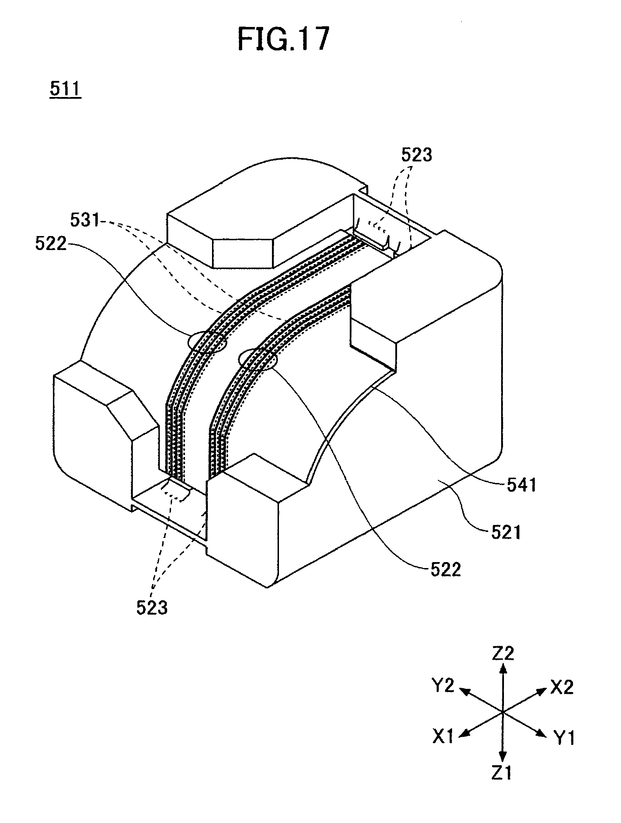

Fig. 17 is a perspective view of the waveguide array 511.

As shown in Fig. 17, the waveguide array 511 includes waveguides 522 and lenses 523.

The waveguide array main body 521 is formed of transparent resin by molding. Grooves 531 are formed in the surface of the waveguide array main body 521 so that the waveguides 522 are formed. Lenses 523 are formed at positions where the ends of the grooves 531 are extended.

The waveguide array main body 521 has an opening section whose shape is approximately concave at the corner of the Z1 direction and the X1 direction. The upper surface above the opening section of the waveguide array main body 521 has a part in which an approximately cylinder-shaped surface (curved surface) is formed in the Z2 direction. The grooves 531 are formed in the curved surface. The curvature of the curved surface is selected so that light is not leaked to the outside when the waveguides 522 are formed.

Resin whose refractive index is different from that of the waveguide array main body 521 is supplied into the grooves 531 and the resin is hardened then the waveguide array main body 521 including the hardened resin is covered with a resin film 541 whose refractive index is almost the same as that of the waveguide array main body 521. With this, the waveguides 522 are formed.

One end of the waveguide 522 faces toward the Z1 direction and the other end thereof faces toward the X2 direction. The cross-sectional shape of the groove 531 is almost a square with 50 µm sides.

In Fig. 16, a plug connector 600 is disposed at one end of an optical fiber cable 601 and is attached to the socket 512 of the optical connector 500. With this, the end surface of the optical fiber cable 601 is positioned to face the lens 523 formed in the waveguide array main body 521.

Light input from the optical fiber cable 601 is condensed at the lens 523 and the condensed light is input to one end of the waveguide 522. The light input to the waveguide 522 is output from the other end of the waveguide 522. The light output from the other end of the waveguide 522 is condensed at another lens 523 and the condensed light is input to the end surface of another optical fiber cable 601 to which another plug connector 600 is attached, to which plug connector 600 another socket 512 of the optical connector 500 is attached.

As described above, according to the fourth embodiment of the present invention, the right angle type adapter (the optical connector 500) can be realized.

In the first embodiment of the present invention, the optical plug connector 200 is secured (locked) to the optical socket connector 100 by threading the screws 227 into the screw holes 122. However, another locking method can be used.

For example, a latching mechanism can be used in which the locked status between the optical plug connector 200 and the optical socket connector 100 is unlocked by a lever. In addition, a mechanical linkage is used in which the optical plug connector 200 is detached from the optical socket connector 100 by using a lever.

As described above, according to the embodiments of the present invention, in the connection of an optical socket connector with an optical plug connector, physical contact by using high force is not required. Therefore, inserting a connector into another connector and extracting the connector from the other connector can be easily executed with low force. Consequently, even if any locking mechanism is used, the strength of the connector can be reduced and the structure thereof can be simplified.

Further, the present invention is not limited to these embodiments, but variations and modifications may be made without departing from the scope of the present invention.

The present application is based on Japanese Priority Patent Application No. 2006-216115 filed on August 8, 2006, with the Japanese Patent Office.

## Claims

1. An optical connector (100, 300, 400, 500) which enables to connect an optical device to one end and another optical device to the other end, comprising:
a waveguide member (111, 311, 411, 511); and
a case (112, 313, 413, 414, 513) which contains the waveguide member (111, 311, 411, 511); wherein
the waveguide member (111, 311, 411, 511) includes
a waveguide array main body (131, 421, 521):
a plurality of waveguides (132, 422, 522) formed in the waveguide array main body (131, 421, 521);
a plurality of first lenses (142, 424, 523) formed in the waveguide array main body (131, 421, 521), each of the first lenses to face one end of a different one of the plural waveguides (132, 422, 522); and
a plurality of second lenses (143, 424, 523) formed in the waveguide array main body (131, 421, 521), each of the second lenses to face the other end of a different one of the plural waveguides (132, 422, 522),
**characterized by** further comprising:
a plurality of the waveguide members, wherein the plurality of waveguide members is being contained in the case (112, 313, 413, 414, 513), and the case (112) includes a plurality of guiding sections (121) into which plugs (212) of a complementary optical plug connector (200) are engaged, and the plurality of guiding sections (121) guide tips of optical fibres of the optical plug connector (200) to the corresponding waveguide members (111).

2. The optical connector (100) as claimed in claim 1, wherein:
the first lenses (142) face an optical device (151, 152, 153, 154) mounted on a printed circuit board (101) when the waveguide member (111) is connected to the printed circuit board (101); and
the second lenses (143) face an optical transmission line when the waveguide member (111) is connected to the optical transmission line.

3. The optical connector (300) as claimed in claim 1, further comprising:
a plug frame (312) which covers one end of the waveguide member (311); wherein
when the waveguide member (311) is connected to the waveguide member (111) of an optical connector (100),
the plug frame (312) is engaged into an opening of the case (112) of the optical connector (100); and
the second lenses (143) of the waveguide member (311) face the second lenses (143) of the waveguide member (111).

4. The optical connector (400) as claimed in claim 1, further comprising:
plug frames (412) disposed at corresponding sides of the waveguide member (411) to cover the sides; wherein
when the waveguide member (411) of the optical connector (400) is connected to the waveguide members (111) of two optical connectors (100),
one of the plug frames (412) is engaged into an opening of the case (112) of a waveguide member (111) of one of the optical connectors (100) ;
the other of the plug frames (412) is engaged into an opening of the case (112) of a waveguide member (111) of the other of the optical connectors (100);
the first lenses (424) of the waveguide member (411) face the second lenses (143) of the waveguide member (111) of one of the optical connectors (100); and
the second lenses (424) of the waveguide member (411) face the second lenses (143) of the waveguide member (111) of the other of the optical connectors (100).

5. The optical connector (500) as claimed in claim 1, further comprising:
sockets (512) to which the corresponding optical devices in the form of optical fiber cables (601) are engaged into; wherein
when the waveguide array (511) is connected to the corresponding two optical fibers cables (601) by using the sockets (512),
the first lenses (523) of the waveguide member (511) face a tip of one of the optical fiber cables (601); and
the second lenses (523) of the waveguide member (511) face a tip of the other of the optical fiber cables (601).

## Patentansprüche

1. Optischer Verbinder (100, 300, 400, 500), der es ermöglicht, eine optische Vorrichtung mit einem Ende und eine andere optische Vorrichtung mit dem anderen Ende zu verbinden, umfassend:
ein Wellenleiterglied (111, 311, 411, 511); und
ein Gehäuse (112, 313, 413, 414, 513), welches das Wellenleiterglied (111, 311, 411, 511) enthält;
bei dem
das Wellenleiterglied (111, 311, 411, 511) enthält:
einen Wellenleiterarray-Hauptkörper (131, 421, 521);
eine Vielzahl von Wellenleitern (132, 422, 522), die in dem Wellenleiterarray-Hauptkörper (131, 421, 521) gebildet sind;
eine Vielzahl von ersten Linsen (142, 424, 523), die in dem Wellenleiterarray-Hauptkörper (131, 421, 521) so gebildet sind, dass jede der ersten Linsen einem Ende eines verschiedenen von der Vielzahl von Wellenleitern (132, 422, 522) zugewandt ist; und
eine Vielzahl von zweiten Linsen (143, 424, 523), die in dem Wellenleiterarray-Hauptkörper (131, 421, 521) so gebildet sind, dass jede der zweiten Linsen dem anderen Ende eines verschiedenen von der Vielzahl von Wellenleitern (132, 422, 522) zugewandt ist,
**dadurch gekennzeichnet, dass** er ferner umfasst:
eine Vielzahl der Wellenleiterglieder, bei dem die Vielzahl der Wellenleiterglieder in dem Gehäuse (112, 313, 413, 414, 513) enthalten ist und das Gehäuse (112) eine Vielzahl von Führungssektionen (121) enthält, in die Stecker (212) eines komplementären optischen Steckverbinders (200) eingreifen, und die Vielzahl von Führungssektionen (121) vordere Enden von optischen Fasern des optischen Steckverbinders (200) zu den entsprechenden Wellenleitergliedern (111) führen.

2. Optischer Verbinder (100) nach Anspruch 1, bei dem:
die ersten Linsen (142) einer optischen Vorrichtung (151, 152, 153, 154) zugewandt sind, die auf eine gedruckte Schaltungsplatte (101) montiert ist, wenn das Wellenleiterglied (111) mit der gedruckten Schaltungsplatte (101) verbunden ist; und
die zweiten Linsen (143) einer optischen Übertragungsleitung zugewandt sind, wenn das Wellenleiterglied (111) mit der optischen Übertragungsleitung verbunden ist.

3. Optischer Verbinder (300) nach Anspruch 1, ferner mit:
einem Steckerrahmen (312), der ein Ende des Wellenleitergliedes (311) bedeckt; bei dem dann,
wenn das Wellenleiterglied (311) mit dem Wellenleiterglied (111) eines optischen Verbinders (100) verbunden ist,
der Steckerrahmen (312) in eine Öffnung des Gehäuses (112) des optischen Verbinders (100) eingreift; und
die zweiten Linsen (143) des Wellenleitergliedes (311) den zweiten Linsen (143) des Wellenleitergliedes (111) zugewandt sind.

4. Optischer Verbinder (400) nach Anspruch 1, ferner mit:
Steckerrahmen (412), die an entsprechenden Seiten des Wellenleitergliedes (411) angeordnet sind, um die Seiten zu bedecken; bei dem dann,
wenn das Wellenleiterglied (411) des optischen Verbinders (400) mit den Wellenleitergliedern (111) von zwei optischen Verbindern (100) verbunden ist,
einer der Steckerrahmen (412) in eine Öffnung des Gehäuses (112) eines wellenleitergliedes (111) von einem der optischen Verbinder (100) eingreift;
der andere der Steckerrahmen (412) in eine Öffnung des Gehäuses (112) eines Wellenleitergliedes (111) von dem anderen der optischen Verbinder (100) eingreift;
die ersten Linsen (424) des Wellenleitergliedes (411) den zweiten Linsen (143) des Wellenleitergliedes (111) von einem der optischen Verbinder (100) zugewandt sind; und
die zweiten Linsen (424) des Wellenleitergliedes (411) den zweiten Linsen (143) des Wellenleitergliedes (111) von dem anderen der optischen Verbinder (100) zugewandt sind.

5. Optischer Verbinder (500) nach Anspruch 1, ferner mit:
Buchsen (512), in die die entsprechenden optischen Vorrichtungen in Form von optischen Faserkabeln (601) eingreifen; bei dem dann,
wenn das Wellenleiterarray (511) mit den entsprechenden zwei optischen Faserkabeln (601) unter Verwendung der Buchsen (512) verbunden ist,
die ersten Linsen (523) des Wellenleitergliedes (511) einem vorderen Ende von einem der optischen Faserkabel (601) zugewandt sind; und
die zweiten Linsen (523) des Wellenleitergliedes (511) einem vorderen Ende von dem anderen der optischen Faserkabel (601) zugewandt sind.

## Revendications

1. Connecteur optique (100, 300, 400, 500) qui permet de connecter un dispositif optique à une extrémité et un autre dispositif optique à l'autre extrémité, comprenant :
un élément 111, 311, 411, 511) formant guide d'onde ; et
un boîtier (112, 313, 413, 414, 513) qui contient l'élément (111, 311, 411, 511) formant guide d'onde;
dans lequel l'élément (111, 311, 411, 511) formant guide d'onde inclut :
un corps principal (131, 421, 521) de groupement de guides d'onde;
une pluralité de guides d'onde (132, 422, 522) formés dans le corps principal (131, 421, 521) de groupement de guides d'onde ;
une pluralité de premières lentilles (142, 424, 523) formées dans le corps principal (131, 421, 521) de groupement de guides d'onde, chacune des premières lentilles pour faire face à une extrémité d'un, différent, des plusieurs guides d'onde (132, 422, 522); et
une pluralité de secondes lentilles (143, 424, 523) formées dans le corps principal (131, 421, 521) de groupement de guides d'onde, chacune des premières lentilles pour faire face à l'autre extrémité d'un, différent, des plusieurs guides d'onde (132, 422, 522),
**caractérisé en ce qu'**il comprend en outre:
une pluralité d'éléments formant guide d'onde, dans lequel la pluralité d'éléments formant guide d'onde est contenue dans le boîtier (112, 313, 413, 414, 513), et dans lequel le boîtier (112) inclut une pluralité de sections (121) de guidage dans lesquelles s'engagent des fiches (212) d'un connecteur optique mâle complémentaire (200), et dans lequel la pluralité de sections (121) de guidage guide les bouts de fibres optiques du connecteur optique mâle (200) vers les éléments (111) formant guide d'onde correspondants.

2. Connecteur optique (100) selon la revendication 1,
dans lequel les premières lentilles (142) font face à un dispositif optique (151, 152, 153, 154) formé sur une carte (101) de circuit imprimé lorsque l'élément (111) formant guide d'onde est connecté à la carte (101) de circuit imprimé, et
dans lequel les secondes lentilles (143) font face à une ligne de transmission optique lorsque l'élément (111) formant guide d'onde est connecté à la ligne de transmission optique.

3. Connecteur optique (300) selon la revendication 1, comprenant en outre :
un châssis (312) de fiche qui couvre une extrémité de l'élément (311) formant guide d'onde,
dans lequel, lorsque l'élément (311) formant guide d'onde est connecté à l'élément (111) formant guide d'onde d'un connecteur optique (100) :
le châssis (312) de fiche s'engage dans une ouverture du boîtier (112) du connecteur optique (100); et
les secondes lentilles (143) de l'élément (311) formant guide d'onde font face aux secondes lentilles (143) de l'élément (111) formant guide d'onde.

4. Connecteur optique (400) selon la revendication 1, comprenant en outre :
des châssis (412) de fiche disposés au niveau de côtés correspondants de l'élément (411) formant guide d'onde pour couvrir les côtés,
dans lequel, lorsque l'élément (411) formant guide d'onde du connecteur optique (400) est connecté aux éléments (111) formant guide d'onde de deux connecteurs optiques (100) :
l'un des châssis (412) de fiche s'engage dans une ouverture du boîtier (112) d'un élément (111) formant guide d'onde de l'un des connecteurs optiques (100) ;
l'autre des châssis (412) de fiche s'engage dans une ouverture du boîtier (112) d'un élément (111) formant guide d'onde de l'autre des connecteurs optiques (100);
les premières lentilles (424) de l'élément (411) formant guide d'onde font face aux secondes lentilles (143) de l'élément (111) formant guide d'onde de l'un des connecteurs optiques (100) ; et
les secondes lentilles (424) de l'élément (411) formant guide d'onde font face aux secondes lentilles (143) de l'élément (111) formant guide d'onde de l'autre des connecteurs optiques (100).

5. Connecteur optique (500) selon la revendication 1, comprenant en outre :
des cavités (512) dans lesquelles s'engagent les dispositifs optiques correspondants sous la forme de câbles (601) à fibres optiques,
dans lequel, lorsque le groupement (511) de guides d'onde est connecté aux deux câbles (601) à fibres optiques en utilisant les cavités (512) :
les premières lentilles (523) de l'élément (511) formant guide d'onde font face à un bout de l'un des câbles (601) à fibres optiques ; et
les secondes lentilles (523) de l'élément (511) formant guide d'onde font face à un bout de l'autre des câbles (601) à fibres optiques.
